# EUROPÄISCHE PATENTSCHRIFT

(11) **EP 4 092 277 B1**
(45) Veröffentlichungstag und Bekanntmachung des Hinweises auf die Patenterteilung: **26.06.2024**
(21) Anmeldenummer: 22166854.4
(22) Anmeldetag: 06.04.2022
(51) Int. Cl.: F15D 1/04, F24F 7/06, F24F 13/02, F24F 13/08

(54) **ROHRBOGEN FÜR EINEN ABLUFTKANAL EINER DUNSTABZUGSHAUBE**
PIPE BEND FOR AN EXHAUST DUCT OF AN EXHAUST HOOD
COUDE TUBULAIRE POUR UN CANAL D'AIR D'ÉVACUATION D'UNE HOTTE ASPIRANTE

(30) Priorität: 21.05.2021 DE 102021113234
(43) Veröffentlichungstag der Anmeldung: 23.11.2022
(73) Patentinhaber: Naber Holding GmbH & Co. KG, 48529 Nordhorn (DE)
(72) Erfinder: Naber, Hans-Joachim, 48527 Nordhorn (DE)
(74) Vertreter: Angerhausen, Christoph

(56) Entgegenhaltungen:
- AT-U1- 8 708
- DE-C- 588 113
- DE-C- 971 995

## Beschreibung

Die Erfindung geht aus von einem Rohrbogen für einen Abluftkanal einer Dunstabzugshaube, wobei der Rohrbogen mindestens ein mehrteiliges und gekrümmtes Luftleitelement aufweist, das sich im Inneren des Rohrbogens erstreckt, wobei ein erstes und ein zweites Teilelement des Luftleitelements in einer Radialrichtung ihrer Krümmung einen Abstand zueinander aufweisen. Ein derartiger Rohrbogen ist aus der DE 588 113 A bekannt. Einen ähnlichen Rohrbogen mit einteiligen Luftleitelementen zeigen die EP 1 923 576 B1, die JP 2002 266815 A, die AT 8 708 U1 und die DE 971995 C.

Bei gattungsgemäßen Rohrbögen für Abluftkanäle von Dunstabzugshauben und dergleichen ist es grundsätzlich wünschenswert, den Druckverlust im Kanal so gering wie möglich zu halten. Bekanntermaßen ist der zu erwartende Druckverlust im Bereich von Richtungsänderungen des Kanals, das heißt insbesondere im Bereich der Rohrbögen, besonders groß, da aufgrund der Umlenkung des Luftstroms im Rohrbogen ein zumindest teilweise nicht laminarer Luftstrom aufgrund von Luftablösungen und damit einhergehenden Verwirbelungen im Rohrbogen eintritt. Die Luftablösungen und Verwirbelungen führen nicht nur zu einem Druckverlust sondern auch zu einer Geräuschentwicklung, die grundsätzlich unerwünscht und auf ein möglichst geringes Maß reduziert werden soll. Ein erster Ansatz diesen Problemen zu begegnen, ist die Verwendung von Luftleitelementen, wobei darüber hinaus der Wunsch fortbesteht, die erzielbaren Effekte hinsichtlich der Geräuschentwicklungssowie Druckverlustverringerung noch weiter zu verbessern.

Es ist daher die Aufgabe der Erfindung, einen Rohrbogen der eingangs beschriebenen Art derart weiterzuentwickeln, dass er eine möglichst geringe Geräuschentwicklung verursacht und im Übrigen einen möglichst geringen Druckverlust für durchströmende Fluide, insbesondere Luft und Wrasen, aufweist.

Diese Aufgabe wird durch einen Rohrbogen mit dem Merkmal des Anspruchs 1 gelöst. Vorteilhafte Ausführungsformen sind jeweils Gegenstand der abhängigen Ansprüche.

Demgemäß ist bei einem Rohrbogen der eingangs beschriebenen Art vorgesehen, dass die Teilelemente mit ihren Stirnseiten einander zugewandter Enden der Teilelemente in der Radialrichtung ihrer Krümmung fluchten.

Die gekrümmten Luftleitelemente können insbesondere zweiteilig ausgebildet sein. Alternativ können sie jedoch auch dreiteilig oder aus noch mehr Teilen ausgebildet sein. Bei der zweiteiligen Ausführung sind die Luftleitelemente vorzugsweise auf halber Länge in Erstreckungsrichtung zwischen den gegenüber liegenden Anschlussquerschnitten des Rohrbogens geteilt, beispielsweise an einem Scheitelpunkt des Luftleitelements.

Bei einer Ausführungsform können die Teilelemente eines weiteren der Luftleitelemente in einem Überlappungsbereich einander zugewandter Enden der Teilelemente miteinander überlappen. Dabei kann vorgesehen sein, dass die beiden Teilelemente in dem Überlappungsbereich gerade um den Abstand voreinander beabstandet sind. In dem Überlappungsbereich können sie sich vorzugsweise parallel zueinander erstrecken.

Die Teilelemente fluchten mit ihren Stirnseiten einander zugewandter Enden der Teilelemente. Dabei sollen sie sich vorzugsweise nicht exakt gegenüberstehen. Es ist vielmehr lediglich vorgesehen, dass die Teilelemente mit ihren Stirnseiten in der Radialrichtung ihrer Krümmung fluchten.

Wenn der Rohrbogen mehrere gekrümmte Luftleitelemente aufweist, kann vorgesehen sein, dass ein erstes gekrümmtes Luftleitelement in einem Überlappungsbereich überlappende Teilelemente der zuvor beschriebenen Art aufweist, während ein zweites gekrümmtes Luftleitelement mit ihren Stirnseiten einander zugewandte Teilelemente aufweist, die mit ihren Stirnseiten in der Radialrichtung der Krümmung fluchten. Beispielsweise kann das gekrümmte Luftleitelement mit den überlappenden Teilelementen ein äußeres gekrümmtes Luftleitelement sein, während das gekrümmte Luftleitelement mit den fluchtenden Stirnseiten ein inneres gekrümmtes Luftleitelement ist, welches näher an einem Innenradius des Rohrbogens im Vergleich zu dem äußeren gekrümmten Luftleitelement angeordnet ist, mithin einen geringeren Krümmungsradius als das äußere Luftleitelement aufweist.

Das mindestens eine Luftleitelement kann mit dem ersten Teilelement bis an einen ersten von zwei gegenüber liegenden Anschlussquerschnitten des Rohrbogens heranreichen. In analoger Weise kann das mindestens eine Luftleitelement mit dem zweiten Teilelement bis an einen zweiten von zwei gegenüber liegenden Anschlussquerschnitten des Rohrbogens heranreichen.

Mindestens eines der beiden Teilelemente des gekrümmten Luftleitelements kann entlang seiner Erstreckungsrichtung auf das andere Teilelement zu einen variierenden Krümmungsradius aufweisen. Vorzugsweise kann es einen zumindest abschnittsweise monoton anwachsenden oder einen sich zumindest abschnittsweise monoton verringernden Krümmungsradius aufweisen. Es kann vorgesehen sein, dass die beiden Teilelemente an ihren voneinander abgewandten Enden denselben Krümmungsradius aufweisen. Insbesondere kann vorgesehen sein, dass die beiden Teilelemente an ihren voneinander abgewandten Enden senkrecht zu einem jeweiligen Anschlussquerschnitt des Rohrbogens ausgerichtet sind.

Der Krümmungsradius eines in Strömungsrichtung durch den Rohrbogen ersten der beiden Teilelemente kann in der Strömungsrichtung anwachsen und weiterhin kann sich der Krümmungsradius eines in der Strömungsrichtung durch den Rohrbogen zweiten der beiden Teilelemente in der Strömungsrichtung verringern. Auf diese Weise kann beispielsweise erreicht werden, dass die beiden Teilelemente des Luftleitelements, obwohl sie mit jeweils einem ihrer beiden Enden senkrecht zu ihrem jeweiligen Anschlussquerschnitt stehen, im Bereich der gegenüber liegenden Enden, an welchen sie maximal aneinander angenähert sind, einen Abstand zueinander in Radialrichtung ihrer Krümmung aufweisen.

Es kann vorgesehen sein, dass sich die beiden Krümmungsradien des ersten und des zweiten Teilelements betragsmäßig oder prozentual identisch verändern, um den erfindungsgemäßen Abstand der Teilelemente zueinander bereitzustellen.

Wenn das Luftleitelement zweiteilig ausgeführt ist, kann insbesondere vorgesehen sein, dass das erste und das zweite Teilelement den Abstand zueinander an einem Scheitelpunkt des Luftleitelements aufweisen.

Der Rohrbogen kann mindestens oder genau zwei Luftleitelemente aufweisen, von denen ein Erstes ein Luftleitelement mit sich überlappenden Teilelementen ist, und von denen ein zweites Luftleitelement ein solches ist, bei dem die Teilelemente mit ihren Stirnseiten in der Radialrichtung ihrer Krümmung fluchten. Dabei kann das erste Luftleitelement einen größeren mittleren Radius als das zweite Luftleitelement aufweisen. Mithin kann das erste Luftleitelement weiter beabstandet von einem inneren Radius des Rohrbogens im Vergleich zu dem zweiten Luftleitelement sein, welches näher bei dem inneren Radius des Rohrbogens angeordnet ist.

Das erste Luftleitelement kann einen Anschlussquerschnitt des Rohrbogens in eine einer Rohrbogeninnenwand des Rohrbogens zugewandte Hälfte und eine einer Rohrbogenaußenwand des Rohrbogens zugewandte Hälfte halbieren. Dabei kann das zweite Luftleitelement die der Rohrbogeninnenwand des Rohrbogens zugewandte Hälfte in eine dem ersten Luftleitelement zugewandte Hälfte und in eine der Rohrbogeninnenwand des Rohrbogens zugewandte Hälfte halbieren.

Der Rohrbogen kann insbesondere als Flachkanalbogen oder als Übergangsbogen von einem rechteckigen Flachkanalanschluss auf einen Rundkanalanschluss, oder umgekehrt, ausgebildet sein.

Es hat sich herausgestellt, dass durch die Beabstandung der Teilelemente in Radialrichtung der Krümmung des Luftleitelements zu einer Verringerung der Strömungsablösung und damit zu einer Unterdrückung der Ausbildung von Turbulenzen im Rohrbogen führt, wodurch letztlich der Druckverlust und die Geräuschentwicklung des Rohrbogens gegenüber den aus dem Stand der Technik bekannten Rohrbögen herabgesetzt werden.

Weitere Einzelheiten der Erfindung werden anhand der nachstehenden Figuren erläutert. Dabei zeigt:
- Figur 1: in perspektivischer und teiltransparenter Darstellung einen als Flachkanal ausgebildeten Rohrbogen gemäß einer Ausführungsform der Erfindung; und
- Figur 2: eine Detailansicht des Rohrbogens nach Figur 1 im Angrenzungsbereich gegenüberliegender Teilelemente.

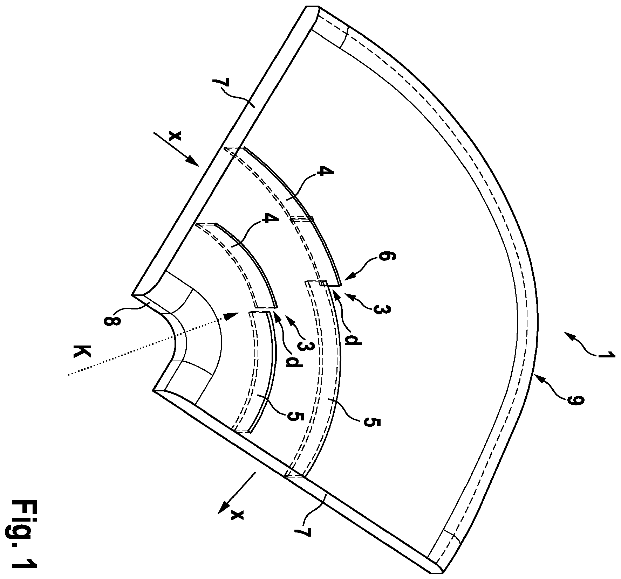

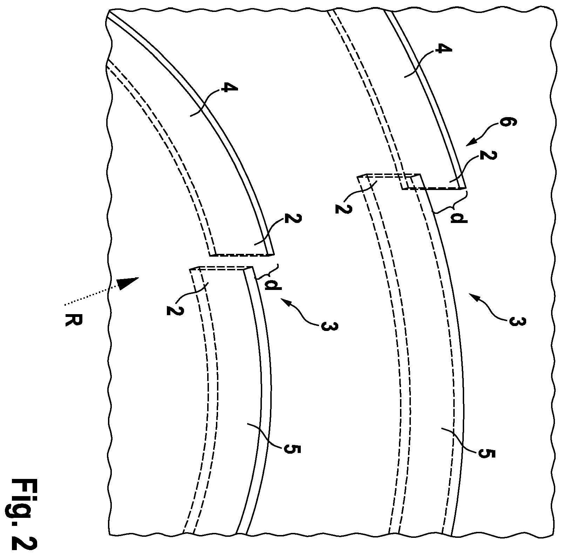

Die in den Figuren 1 und 2 gezeigte Ausführungsform eines erfindungsgemäßen Rohrbogens 1 ist als ein Flachkanal ausgebildet und weist demgemäß einen im Wesentlichen rechteckigen Querschnitt mit abgerundeten Ecken auf. Der Rohrbogen 1 ist folglich insbesondere für Abluftkanäle geeignet, die einen entsprechenden rechteckigen Querschnitt aufweisen, wie dies grundsätzlich aus dem Stand der Technik bekannt ist, um insbesondere platzsparend beispielsweise im Sockel eines Küchenschranks oder im Deckenbereich eines Raumes einen Abluftkanal zur Verbindung beispielsweise einer Dunstabzugshaube mit einem Mauerkasten für die Ableitung von Wrasen bereitzustellen.

Der erfindungsgemäße Rohrbogen 1 weist zwei zweiteilige und gekrümmte Luftleitelemente 3 auf, die jeweils ein erstes und ein zweites Teilelement 4, 5 aufweisen. Erfindungsgemäß weisen das erste und das zweite Teilelement 4, 5 des Luftleitelements 3 in der Radialrichtung R der Krümmung des Luftleitelements 3 einen Abstand d zueinander auf.

Wie zu erkennen ist, überlappen die Teilelemente 4, 5 des der Rohrbogenaußenwand 9 zugewandten Luftleitelements 3 in einem Überlappungsbereich 6 der einander zugewandten Enden 2 der Teilelemente 4, 5. Davon abweichend weisen die beiden Teilelemente 4, 5 des der Rohrbogeninnenwand 8 des Rohrbogens 1 zugewandten Luftleitelements keinen Überlappungsbereich auf. Zwar weisen die beiden gegenüber stehenden Enden 2 der Teilelemente 4, 5 den erfindungsgemäßen Abstand d in der Radialrichtung R zueinander auf. Andererseits jedoch stehen sie in der Radialrichtung R gerade mit ihren gegenüber liegenden Stirnseiten in der Flucht der Radialrichtung R.

Der Abstand d zwischen den beiden Teilelementen 4, 5 kann gerade dadurch bereitgestellt werden, dass in der Strömungsrichtung x der Luft durch den Rohrbogen 1 die beiden ersten Teilelemente 4 eine kontinuierliche Vergrößerung ihres Krümmungsradius aufweisen, während sich der Krümmungsradius der in der Strömungsrichtung x durch den Rohrbogen angeordneten zweiten Teilelemente 5 in der Strömungsrichtung x verringert.

### Bezugszeichenliste

- 1: Rohrbogen
- 2: Ende
- 3: Luftleitelement
- 4: erstes Teilelement
- 5: zweites Teilelement
- 6: Überlappungsbereich
- 7: Anschlussquerschnitt
- 8: Rohrbogeninnenwand
- 9: Rohrbogenaußenwand
- R: Radialrichtung
- x: Strömungsrichtung

## Patentansprüche

1. Rohrbogen (1) für einen Abluftkanal einer Dunstabzugshaube, wobei der Rohrbogen (1) mindestens ein mehrteiliges und gekrümmtes Luftleitelement (3) aufweist, das sich im Innern des Rohrbogens (1) erstreckt, wobei ein erstes und ein zweites Teilelement (4, 5) des Luftleitelements (3) in einer Radialrichtung (R) ihrer Krümmung einen Abstand (d) zueinander aufweisen, **dadurch gekennzeichnet, dass** die Teilelemente (4, 5) mit ihren Stirnseiten einander zugewandter Enden (2) der Teilelemente (4, 5) in der Radialrichtung (R) ihrer Krümmung fluchten.

2. Rohrbogen (1) nach Anspruch 1, bei dem das mindestens eine Luftleitelement (3) mit dem ersten Teilelement (4) bis an einen ersten von zwei gegenüber liegenden Anschlussquerschnitten (7) des Rohrbogens (1) heranreicht, und bei dem das mindestens eine Luftleitelement (3) mit dem zweiten Teilelement (5) bis an einen zweiten von zwei gegenüber liegenden Anschlussquerschnitten (7) des Rohrbogens (1) heranreicht.

3. Rohrbogen (1) nach einem der vorangegangenen Ansprüche, bei dem mindestens eines der beiden Teilelemente (4, 5) entlang seiner Erstreckungsrichtung auf das andere Teilelement (4, 5) zu einen variierenden Krümmungsradius, vorzugsweise einen zumindest abschnittsweise monoton anwachsenden oder sich zumindest abschnittsweise monoton verringernden Krümmungsradius aufweist.

4. Rohrbogen (1) nach Anspruch 3, bei dem die beiden Teilelemente (4, 5) an ihren voneinander abgewandten Enden denselben Krümmungsradius aufweisen.

5. Rohrbogen (1) nach Anspruch 3 oder 4, bei dem der Krümmungsradius eines in Strömungsrichtung (x) durch den Rohrbogen (1) ersten (4) der beiden Teilelemente (4, 5) in der Strömungsrichtung (x) anwächst und sich der Krümmungsradius eines in der Strömungsrichtung (x) durch den Rohrbogen (1) zweiten (5) der beiden Teilelemente (4, 5) in der Strömungsrichtung (x) verringert.

6. Rohrbogen (1) nach Anspruch 5, bei dem sich die beiden Krümmungsradien betragsmäßig oder prozentual identisch verändern.

7. Rohrbogen (1) nach einem der vorangegangenen Ansprüche, bei dem das Luftleitelement (3) zweiteilig ist, wobei das erste und das zweite Teilelement (4, 5) den Abstand an einem Scheitelpunkt des Luftleitelements (3) aufweisen.

8. Rohrbogen (1) nach einem der vorangegangenen Ansprüche, bei dem der Rohrbogen (1) mindestens oder genau Luftleitelemente (3) aufweist, von denen ein erstes sich im Innern des Rohrbogens (1) erstreckendes, mehrteiliges und gekrümmtes Luftleitelement (3) ein erstes und ein zweites Teilelement (4, 5) aufweist, die in einer Radialrichtung (R) ihrer Krümmung einen Abstand (d) zueinander aufweisen, wobei die Teilelemente (4, 5) des ersten Luftleitelements (3) in einem Überlappungsbereich (6) einander zugewandter Enden (2) der Teilelemente (4, 5) miteinander überlappen, und wobei die Teilelemente (4, 5) des ersten Luftleitelements (3) in dem Überlappungsbereich um den Abstand (d) voneinander beabstandet sind, von denen ein zweites Luftleitelement (3) von dem mindestens einen Luftleitelement (3), bei dem die Teilelemente (4, 5) mit ihren Stirnseiten einander zugewandter Enden (2) der Teilelemente (4, 5) in der Radialrichtung (R) ihrer Krümmung fluchten, definiert wird.

9. Rohrbogen (1) nach Anspruch 8, bei dem das erste Luftleitelement (3) einen größeren mittleren Radius als das zweite Luftleitelement (3) aufweist.

10. Rohrbogen (1) nach Anspruch 8 oder 9, bei dem das erste Luftleitelement (3) einen Anschlussquerschnitt (7) des Rohrbogens (1) in eine einer Rohrbogeninnenwand (8) des Rohrbogens (1) zugewandte Hälfte und eine einer Rohrbogenaußenwand (9) des Rohrbogens (1) zugewandte Hälfte halbiert, wobei das zweite Luftleitelement (3) die der Rohrbogeninnenwand des Rohrbogens (1) zugewandte Hälfte in eine dem ersten Luftleitelement (3) zugewandte Hälfte und in eine der Rohrbogeninnenwand des Rohrbogens (1) zugewandte Hälfte halbiert.

11. Rohrbogen (1) nach einem der vorangegangenen Ansprüche, der als Flachkanalbogen oder als Übergangsbogen von einem rechteckigen Flachkanalanschluss auf einen Rundkanalanschluss, oder umgekehrt, ausgebildet ist.

## Claims

1. A pipe bend (1) for an exhaust air duct of a fume extraction hood, wherein the pipe bend (1) has at least one multi-part and curved air guiding element (3) which extends in the interior of the pipe bend (1), wherein a first and a second partial element (4, 5) of the air guiding element (3) have a distance (d) from one another in a radial direction (R) of their curvature, **characterised in that** the partial elements (4, 5) are aligned with their end faces of ends (2) of the partial elements (4, 5) facing one another in the radial direction (R) of their curvature.

2. The pipe bend (1) according to claim 1, in which the at least one air guiding element (3) extends with the first partial element (4) up to a first of two opposite connection cross-sections (7) of the pipe bend (1), and in which the at least one air guiding element (3) extends with the second partial element (5) up to a second of two opposite connection cross-sections (7) of the pipe bend (1).

3. The pipe bend (1) according to one of the preceding claims, in which at least one of the two partial elements (4, 5) has a varying radius of curvature along its direction of extension onto the other partial element (4, 5), preferably a radius of curvature which increases monotonically at least in sections or decreases monotonically at least in sections.

4. The pipe bend (1) according to claim 3, in which the two partial elements (4, 5) have the same radius of curvature at their ends facing away from one another.

5. The pipe bend (1) according to claim 3 or 4, in which the radius of curvature of a first (4) of the two partial elements (4, 5) in the flow direction (x) through the pipe bend (1) increases in the flow direction (x) and the radius of curvature of a second (5) of the two partial elements (4, 5) in the flow direction (x) through the pipe bend (1) decreases in the flow direction (x).

6. The pipe bend (1) according to claim 5, in which the two radii of curvature vary identically in terms of amount or percentage.

7. The pipe bend (1) according to one of the preceding claims, in which the air guiding element (3) is in two parts, wherein the first and the second partial element (4, 5) have the distance at an apex of the air guiding element (3).

8. The pipe bend (1) according to one of the preceding claims, in which the pipe bend (1) has at least or exactly two air guiding elements (3), of which a first multi-part and curved air guiding element (3) extending in the interior of the pipe bend (1) has a first and a second partial element (4, 5) which have a distance (d) from one another in a radial direction (R) of their curvature,
wherein the partial elements (4, 5) of the first air guiding element (3) overlap one another in an overlap region (6) of ends (2) of the partial elements (4, 5) facing one another, and
wherein the partial elements (4, 5) of the first air guiding element (3) are spaced apart from one another by the distance (d) in the overlap region, of which a second air guiding element (3) is defined by the at least one air guiding element (3), in which the partial elements (4, 5) are aligned with their end faces of ends (2) of the partial elements (4, 5) facing one another in the radial direction (R) of their curvature.

9. The pipe bend (1) according to claim 8, in which the first air guiding element (3) has a larger average radius than the second air guiding element (3).

10. The pipe bend (1) according to claim 8 or 9, in which the first air guiding element (3) bisects a connection cross-section (7) of the pipe bend (1) into a half facing a pipe bend inner wall (8) of the pipe bend (1) and a half facing a pipe bend outer wall (9) of the pipe bend (1), wherein the second air guiding element (3) bisects the half facing the pipe bend inner wall of the pipe bend (1) into a half facing the first air guiding element (3) and into a half facing the pipe bend inner wall of the pipe bend (1).

11. The pipe bend (1) according to one of the preceding claims, which is formed as a flat channel bend or as a transition bend from a rectangular flat channel connection to a round channel connection, or vice versa.

## Revendications

1. Tube coudé (1) pour un canal d'évacuation d'air d'une hotte aspirante, dans lequel le tube coudé (1) comprend au moins un élément de guidage d'air (3) en plusieurs parties et incurvé, qui s'étend à l'intérieur du tube coudé (1), dans lequel un premier et un deuxième éléments partiels (4, 5) de l'élément de guidage d'air (3) présentent, dans une direction radiale (R) de leur courbure, une distance (d) entre eux, **caractérisé en ce que** les éléments partiels (4, 5) sont alignés, avec leurs faces frontales d'extrémités (2), orientées les unes vers les autres, des éléments partiels (4, 5), dans la direction radiale (R) de leur courbure.

2. Tube coudé (1) selon la revendication 1, dans lequel l'au moins un élément de guidage d'air (3) arrive, avec le premier élément partiel (4), jusqu'à une première parmi deux sections transversales de raccordement (7) opposées du tube coudé (1), et dans lequel l'au moins un élément de guidage d'air (3) arrive, avec le deuxième élément partiel (5), jusqu'à une deuxième portion, parmi deux sections transversales de raccordement (7) opposées du tube coudé (1).

3. Tube coudé (1) selon l'une des revendications précédentes, dans lequel au moins un des deux éléments partiels (4, 5) comprend, le long de sa direction d'extension vers l'autre élément partiel (4, 5) un rayon de courbure variable, de préférence un rayon de courbure croissant de manière monotone au moins à certains endroits ou diminuant de manière monotone au moins à certains endroits.

4. Tube coudé (1) selon la revendication 3, dans lequel les deux éléments partiels (4, 5) présentent, au niveau de leurs extrémités opposées entre elles, le même rayon de courbure.

5. Tube coudé (1) selon la revendication 3 ou 4, dans lequel le rayon de courbure d'un premier (4) des deux éléments partiels (4, 5) dans la direction d'écoulement (x) à travers le tube coudé (1) augmente dans la direction d'écoulement (x) et le rayon de courbure d'un deuxième (5) des deux éléments partiels (4, 5) dans la direction d'écoulement (x) à travers le tube coudé (1) diminue dans la direction d'écoulement (x).

6. Tube coudé (1) selon la revendication 5, dans lequel les deux rayons de courbure varient de manière identique en valeur absolue ou en pourcentage.

7. Tube coudé (1) selon l'une des revendications précédentes, dans lequel l'élément de guidage d'air (3) est constitué de deux parties, dans lequel les premier et deuxième éléments partiels (4, 5) présentent une distance au niveau d'un sommet de l'élément de guidage d'air (3).

8. Tube coudé (1) selon l'une des revendications précédentes, dans lequel le tube coudé (1) comprend au moins ou exactement deux éléments de guidage d'air (3), dont un premier élément de guidage d'air (3), s'étendant à l'intérieur du tube coudé (1), constitué de plusieurs parties et incurvé, comprend un premier et un deuxième éléments partiels (4, 5), qui présentent entre eux une distance (d) dans la direction radiale (R) de leur courbure,
dans lequel les éléments partiels (4, 5) du premier élément de guidage d'air (3) se superposent entre eux dans une zone de superposition (6) d'extrémités (2), orientées les unes vers les autres, des éléments partiels (4, 5) et
dans lequel les éléments partiels (4, 5) du premier élément de guidage d'air (3) sont distants entre eux dans la zone de superposition de la distance (d), dont un deuxième élément de guidage d'air (3) est défini par l'au moins un élément de guidage d'air (3), dans lequel les éléments partiels (4, 5) sont alignés avec leurs faces frontales d'extrémités (2), orientées les unes vers les autres, des éléments partiels (4, 5), dans la direction radiale (R) de leur courbure.

9. Tube coudé (1) selon la revendication 8, dans lequel le premier élément de guidage d'air (3) présente un rayon moyen plus grand que le deuxième élément de guidage d'air (3).

10. Tube coudé (1) selon la revendication 8 ou 9, dans lequel le premier élément de guidage d'air (3) divise une section transversale de raccordement (7) du tube coudé (1) en une moitié orientée vers une paroi interne (8) du tube coudé (1) et une moitié orientée vers une paroi externe (9) du tube coudé (1), dans lequel le deuxième élément de guidage d'air (3) divise la moitié orientée vers la paroi interne du tube coudé (1) en une moitié orientée vers le premier élément de guidage d'air (3) et une moitié orientée vers la paroi interne du tube coudé (1).

11. Tube coudé (1) selon l'une des revendications précédentes, qui est conçu comme un coude de canal plat ou comme un coude de transition d'un raccordement de canal plat vers un raccordement de canal rond ou inversement.
